# EUROPEAN PATENT SPECIFICATION

(11) **EP 0 376 130 B1**
(45) Date of publication and mention of the grant of the patent: **10.03.1993**
(21) Application number: 89123485.8
(22) Date of filing: 19.12.1989
(51) Int. Cl.: F01M 3/00, F01M 9/10, F01L 3/20

(54) **2-Cycle engine**
Zweitaktbrennkraftmaschine
Moteur à combustion interne à deux temps

(30) Priority: 26.12.1988 JP 326012/88
(43) Date of publication of application: 04.07.1990
(73) Proprietor: YAMAHA HATSUDOKI KABUSHIKI KAISHA, Iwata-shi Shizuoka-ken, 438 (JP)
(72) Inventor: Matsuo, Noritaka, Kakegawa-shi Shizuoka-ken (JP); Masuda, Tatsuyuki, Iwata-shi Shizuoka-ken (JP); Koriyama, Masao, Hamamatsu-shi Shizuoka-ken (JP)
(74) Representative: Grünecker, Kinkeldey, Stockmair & Schwanhäusser Anwaltssozietät

(56) References cited:
- DE-A- 3 735 595
- US-A- 4 368 698

## Description

A two-cycle engine having an oiling system employed for supplying lubricating oil directly to a point to be lubricated whereas air is supplied into the crank chamber through an intake passage containing a reed valve wherein said intake passage is provided with an oil spray nozzle the nose portion of which opens into the intake passage upstream of said reed valve.

In order to lubricate a 2-cycle engine whose crank chamber is supplied through the intake passage of the engine containing a reed valve with a fuel-air mixture produced by a carburettor the so called separate oiling system has been widely employed recently, in which the lubricating oil is supplied into the intake passage upstream of the reed valve. The oil thus supplied into the intake passage is mixed with the fuel-air mixture and lubricates the big end of the connecting rod and other sliding surfaces, but thereafter is combusted together with fuel and exhausted together with the exhaust gas into the atmosphere causing blue smoke.

The afore-mentioned drawbacks are specifically severe under cold start conditions and in the area of low engine load.

In order to reduce blue smoke it is known in the art to supply oil directly to points to be lubricated and corresponding oiling systems were developed.

Thus, it is well known in the art to supply fuel and air to the cylinder directly applying an air assisted fuel injection system. Thus, as a 2-cycle engine, a gasoline engine or a diesel engine is known, in which only air is supplied into the cylinder and the fuel is injected into the air at high temperature and high pressure near the close of the compression stroke to become ignited and combusted. However, if in such an engine the above-mentioned oiling system for supplying lubricating oil only directly to two points to be lubricated is employed and if oil is supplied directly to the necessary portions such as the connecting rod bearings or crank shaft journals it is only air which passes through the reed valve inside the intake passage. In conjunction herewith the valve slapping noise of the reed valve is increased and/or the sealing ability of the reed valve is deteriorated as there are no damping deposits to absorb shocks and closing forces of the valve reed when the reeds are closed.

Thus, considering such a 2-cycle engine as indicated above, if the above-mentioned oiling system for supplying lubricating oil only directly to points to be lubricated is employed the buffering action of the lubricating oil and/or fuel between the valve reeds and their associated valve seats of the reed valve disappears causing increased seating noises of said reeds. Moreover, the absence of oil on the valve seat deteriorates the sealing ability of the reed valve, which, however, is essential to be maintained as the reed valve then spoils the engine performance because the fresh air in the crank chamber in case of insufficient sealing abilities of the reed valve cannot be completely prevented from returning or flowing back in to the intake passage.

A 2-cycle engine as indicated in the first paragraph of this specification is known from DE-A-37 35 595. The lubricating system of this engine comprises a reed valve disposed in an intake passage leading to the crank chamber of the engine and an oil spray nozzle which opens into the intake passage upstream of the reed valve. In that system lubricating oil is to be continuously supplied from an oil pump and the lubricating oil accumulating at the bottom of the crank case may imply oil splashing problems to occur also.

Thus, it is an object of the present invention to provide a 2-cycle engine whose reed valve noises can be reduced substantially and whose reed valve sealing ability can be increased, even if the engine employs an oiling or lubricating system for supplying lubricating oil only directly to points which are to be lubricated. More specifically, it is desired to provide such an engine with a lubricating oil recycling structure without deteriorating the charging performance of the engine.

In order to accomplish the above-mentioned object the 2-cycle engine according to the present invention comprises an intake passage having a reed valve which is provided with an oil spray nozzle the nose portion of which opens, into the intake passage upstream of said reed valve wherein the bottom portion of the crank chamber and the oil spray nozzle upstream of the reed valve are communicated with each other through a communicating passage provided with a check valve for preventing intake air from flowing from the intake passage into the crank chamber.

According to yet another preferred embodiment of the present invention the oil spray nozzle of the air intake passage, supported by the air intake pipe which defines said air passage, opens nearly at a centre axis or middle portion of the cross section of the air intake passage in order to supply oil centrally with respect to the downstream reed valve.

Further preferred embodiments of the new 2-cycle engine according to the present invention are laid down in the further sub-claims.

According to this invention, since the reed valve is supplied with lubricating oil from upstream, the seating noises of the reed valve can be reduced by the buffering action of this oil, and the sealing agility of the reed valve is heightened because the seating force of the valve reeds is increased by the oil, which securely prevents the air in the crank chamber from flowing back into the intake passage and thus restrains the engine performance from getting spoiled by such back flow. Especially, if an oil spray nozzle is opened nearly at the middle of the intake passage, the above effect becomes more remarkable because the oil sprayed from the oil spray nozzle is uniformly supplied to the entire reed value.

By the way, although the 2-cycle engine concerned employs an oiling system for supplying lubricating oil only directly to points to be lubricated such as crank journal, connecting rod big end, etc., the actual oil supply by this system is restrained to its minimum required to reduce blue smoke in the engine exhaust gas and is far less than that by the separate oiling system. Accordingly, even if a small quantity of oil is supplied by the oil pump directly into the intake passage upstream of the reed valve only to apply on the reed valve this oil will not cause blue smoke problem, and recycling the lubricating oil accumulated in the crank chamber bottom after passing points to be lubricated into the intake passage upstream of the reed valve through a check valve utilizing the pressure within the crank chamber is very advantageous for the exhaust gas blue smoke problem since new oil need not be supplied.

Thus, in the new 2-cycle engine wherein fuel is injected directly into the combustion chamber of the cylinder supplying the lubricating oil directly to the necessary locations an oil discharging nozzle is provided in the intake passage upstream of the reed valve and a conduit is provided which connects the bottom of the crank-case and the intake passage upstream of the reed valve, respectively, in order to supply deposits of lubricating oil from said bottom of the crank case to the air intake passage upstream of the reed valve. Preferably, said oil discharging nose portion or opening which opens at the approximate centre of the intake passage with respect to the cross section thereof. Thus, noise radiation from the closing reeds of the reed valve is remarkably reduced whereas the reed valve establishes increased sealing abilities due to an oil film being formed in between the reeds and their associated valve seats. The check valve prevents an air flow from the intake passage to the crank case while enabling lubricating oil to be transferred from the bottom of the crank case to a position inside the intake pipe of the intake passage upstream of the reed valve but prevents intake air from bypassing the reed valve and flowing directly into the crank case.

Thus, the slapping noise of the reed valve is reduced and the sealing ability of the reed valve is improved due to the oil which is supplied upstream of the reed valve into the intake passage to become atomised and deposited on the seat surface of the valve seats of the reed valve to absorb shocks when the reed valve is closed. In order to deliver the oil droplets equally to the reed valve it is preferred that the nozzle opening of the oil spray nozzle supported by the intake pipe opens at approximately the centre axis of the intake passage. Moreover, it is preferred that the distance A between a base portion of the reed valve and the outlet of the oil spray nozzle be in the order of 5 to 10 millimetres in order to assure optional atomization of the oil on the one hand and, preventing the oil droplets from depositing on the inside wall of the intake pipe on the other hand. Thus, oil is discharged from the nozzle during a suction stroke of the engine. As within the framework of a direct lubricating engine wherein lubricating oil is supplied only directly to points to be lubricated the amount of oil distributed is minimal the occurence of the blue smoke phenomenon is reliably prevented even though some oil is supplied into the air flow passing through the intake passage upstream of the reed valve only intended to form droplets for adhering to the reed valve in order to improve the abilities of same.

In the following the invention is described and explained more clearly by means of embodiments of the present invention in conjunction with the associated drawings, wherein :
figure 1 is a vertical cross sectional view of a 2-cycle diesel engine according to an embodiment of the present invention, and
figures 2 and 3 are cross sectional views of the reed valve showing oil adhesion thereon according to the present invention, showing the valve in its opened and closed position respectively.

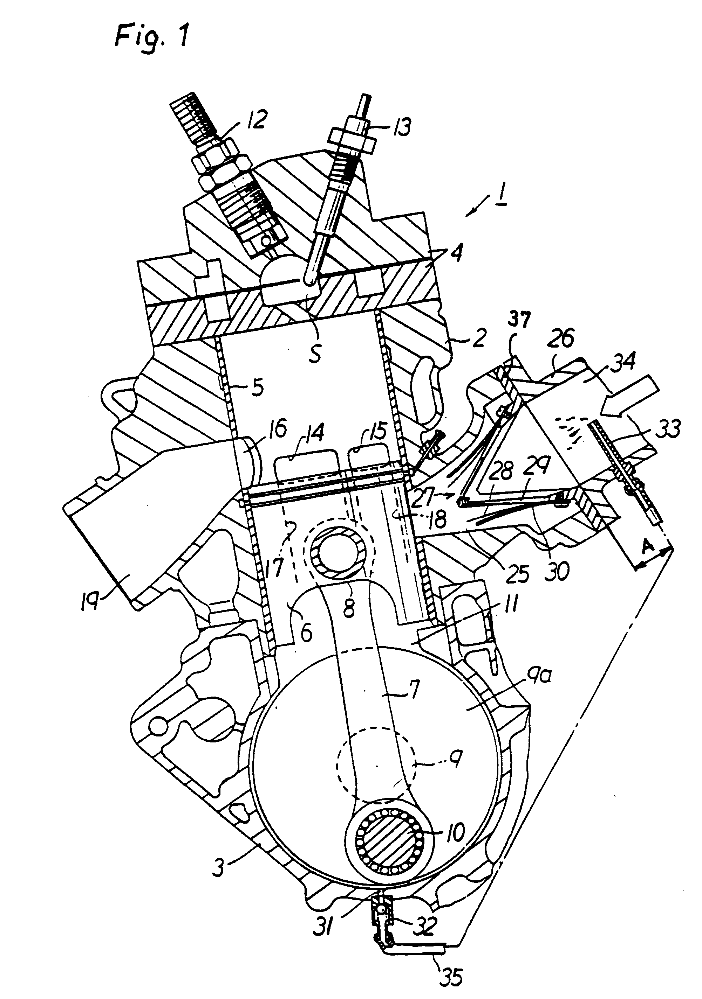

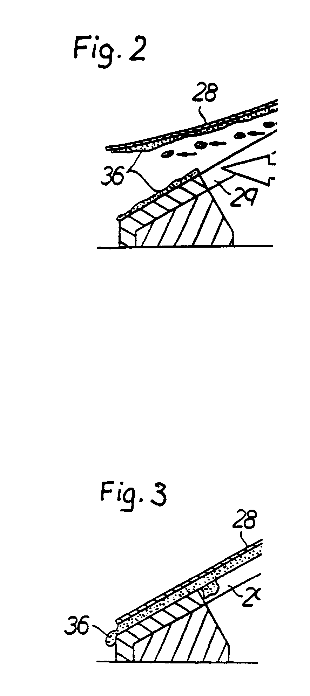

Now an embodiment of this invention is described referring to attached drawings. Fig. 1 is a vertical cross-sectional view of a 2-cycle diesel engine according to this invention, and Figs. 2 and 3 are cross-sectional views of the reed valve showing oil adhesion on the reed valve when the valve is opened and closed, respectively.

In the 2-cycle diesel engine 1 shown in Fig. 1, the reference number 2 denotes a cylinder body disposed above the crankcase 3 on which body 2 is mounted a cylinder head 4. At the middle of the cylinder body 2 is formed a cylinder 5 in which is fitted a piston 6 slidably in the vertical direction. To the piston 6 is connected the small end of the connecting rod 6 through a piston pin 8, and the big end of the connecting rod 7 is connected to the web 9a of the crankshaft 9 through a crank pin 10. The crankshaft 9 is rotatably accommodated in the crank chamber 11 within the crankcase 3. The cylinder head 4 has a swirl chamber S formed within, into which are faced the tips of a fuel injection valve 12 and a glow plug 13 both mounted on the cylinder head 4 through screws. Although it is into the swirl chamber S in this embodiment that the fuel is injected, the fuel may be injected directly into the cylinder 5 by the fuel injection valve 12 without providing this swirl chamber S. Further, through the cylinder 5 wall is opened scavenging ports 14 and 15 and an exhaust port 16.

On the other hand, through the cylinder body 2 are formed scavenging passages 17 and 18 and an exhaust passage 19. One end of each scavenging passage 17 or 18 is opened into the cylinder 5 through the scavenging port 14 or 15, respectively, and the other end thereof is opened into the crank chamber 11. One end of the exhaust passage 19 is opened into the cylinder 5 through the exhaust port 16, and to the other end thereof is connected an exhaust pipe (not shown).

On one side of the cylinder body 2 is formed an intake passage 25 one end of which is opened into the crank chamber 11 and to the other end of which is connected an intake pipe 26. Within the intake passage 25 is installed a reed valve 27 constructed with elastically flexible reeds 28, valve seats 29 on which the reeds 28 are to be seated and stoppers 30 for limiting the opening of the reeds 28 to permit air flow only toward the crank chamber 11.

At the bottom of the crankcase 3 is bored an oil hole 31 to which is connected a check valve 32.

On the other hand, an oil spray nozzle 33 is installed through the intake pipe 26 wall and is opened at the middle of the intake passage 34 of the intake pipe 26 upstream of the reed valve 27. A preferred distance between the reed valve (more precisely a mounting base portion 37 thereof) and the nose portion centre axis of the oil spray nozzle amounts to 5 to 10 millimetres. If the distance is reduced exceedingly the atomization of the discharged oil were deteriorated whereas an exceedingly increased distance could result in the oil droplets being undesirably deposited on the inside wall of the intake pipe upstream of the reed valve without performing the objectives of said oil supply. This nozzle 33 and the check valve 32 are connected with each other through a pipe 35 communicating the crank chamber 11 with the intake passage 34 upstream of the reed valve 27 through the check valve 32. The check valve 32 is employed to prevent air from flowing from the intake passage 34 into the crank chamber 11 directly through the pipe 35 while permitting, as described later, the oil accumulated in the bottom of the crank chamber 11 to flow only toward the oil spray nozzle 33.

Next is described the action of this 2-cycle diesel engine 1.

In this engine 1, an oil pump (not shown) directly supplies required minimum amount of oil to the points to be lubricated such as crankshaft 9 journals, connecting rod 7 big end, rubbing portion of the cylinder 5 against the piston 6, etc., and part of this supplied oil is, after passing through lubricating points, accumulated in the bottom of the crank chamber 11.

When the piston 6 comes down in the crankcase 3 primarily compressing the air taken into the crank chamber 11, the oil accumulated in the bottom of the crank chamber 11 is sent by the pressure within the crank chamber 11 from the check valve 32 to the oil spray nozzle 33 through the pipe 35, and is sprayed from this nozzle 33. That is, during the intake stroke in which the piston 6 is going up, within the crank chamber 11 is produced a vacuum which pull-opens the reed valve 27 to take air into the crank chamber 11 through the intake passage 25, causing the oil from the nozzle 33 upstream of the reed valve 27 to be sprayed, to flow in a mist state together with the intake air, to be supplied to the reed valve 27, and to be applied on the seating surface of the reed 28 and the valve seat 29 as shown by the reference number 36 in Fig. 2. Accordingly, when the reed valve 27 is closed during the exhaust-scavenge stroke in which the piston 6 comes down, since oil 36 exists between the reed 28 and the valve seat 29 as shown in Fig. 3, the seating noise of the reed 28 can be reduced by the buffering action of the oil 36. In addition, since the sealing ability of the reed valve 27 is heightened because the seating force of the valve reed 28 is increased by the oil 36 between the valve reed 28 and the valve seat 29, and thus the air in the crank chamber 11 is securely prevented from flowing back into the intake passage 25 through the reed valve 27, the engine performance deterioration is restrained. Especially, if the oil spray nozzle 33 is opened nearly at the middle of the intake passage 34, the above effects become more remarkable because the oil sprayed from the oil spray nozzle 33 is uniformly supplied to the entire reed valve 27.

By the way, although the engine concerned 1 employs an oiling system for supplying lubricating oil only directly to points to be lubricated as described above, since the actual oil supply by this system is little as compared with that by the separate oiling system, and further since the lubricating oil accumulated in the crank chamber 11 bottom is recycled into the intake passage 34 upstream of the reed valve 27 utilizing the pressure within the crank chamber 11 in this embodiment, the amount of oil combusted together with fuel becomes very small, which is very advantageous for the exhaust gas blue smoke problem.

Although above embodiment refers specifically to the 2-cycle diesel engine, it is of course that the 2-cycle gasoline engine is included in the subjects of this invention. As is obvious with the above description, since the reed valve is supplied with oil from upstream according to this invention, this invention is effective for reducing the reed valve noise and for heightening its sealing ability in the 2-cycle engine in which only air is supplied to the crank chamber and the lubricating oil is supplied only directly to the points to be lubricated.

## Claims

1. A two-cycle engine having an oiling system employed for supplying lubricating oil directly to a point to be lubricated whereas air is supplied into the crank chamber (11) through an intake passage (25) containing a reed valve (27), wherein said intake passage (25) is provided with an oil spray nozzle (33) the nose portion of which opens into the intake passage (25) upstream of said reed valve (27);
**characterized in that:**
a bottom portion of the crank chamber (11) is communicated with the oil spray nozzle (33) upstream of said reed valve (27) through a communicating pipe (35) including a check valve (32) for preventing intake air from flowing from said intake passage (25) into said crank chamber (11) bypassing the reed valve (27).

2. A two-cycle engine as claimed in Claim 1 **characterized in that** said communicating pipe (35) directly connects the bottom of the crank chamber (11) with the oil spray nozzle (33) enabling lubricating oil collected on the bottom of the crank chamber (11) to be supplied to the oil spray nozzle (33) upon air pressure increase into the crank chamber (11) caused by a downward exhaust stroke of a piston (6) of the engine.

3. A two cycle engine as claimed in Claims 1 or 2 **characterized in that** the check valve (32) is fixed at the outside bottom portion of the crank case (3), the inlet of the check valve (33) communicates through a bore with the interior of the crank chamber (11) whereas the outlet of the check valve (32) communicates to the communicating pipe (35) which, in turn, preferably terminates into the inlet portion of the oil spray nozzle (33) the outlet nose portion of which opens into the air intake passage (34) of the intake pipe (26).

4. A two-cycle engine as claimed in at least one of the preceding Claims 1 to 3, **characterized in that** the oil spray nozzle (33) opens nearly a centre axis or middle portion of the cross section of the air intake passage (25).

5. A two-cycle engine as claimed in at least one of the preceding Claims 1 to 4, **characterized in that**, said oil spray nozzle (33) opens at a distance of about 5-10 millimetres ahead of a base portion (37) of the reed valve (27).

## Patentansprüche

1. Zweitakt-Motor mit einem Schmiersystem, angewandt, um Schmieröl direkt zu einer zu schmierenden Stelle zuzuführen, während Luft in die Kurbelkammer (11) durch einen Einlaßkanal (25), der ein REED-Ventil enthält, zugeführt wird, wobei dieser Einlaßkanal (25) mit einer Ölsprühdüse (33) versehen ist, dessen Nasenabschnitt sich in den Einlaßkanal (25) stromauf des REED-Ventils (27) öffnet, **dadurch gekennzeichnet**, daß ein Bodenabschnitt der Kurbelkammer (11) mit der Ölsprühdüse (33) stromauf des REED-Ventiles (27) durch ein Verbindungsrohr (35), das ein Rückschlagventil (32) enthält, um zu verhindern, daß die Ansaugluft von dem Einlaßkanal (25) unter begehung des REED-Ventiles (27) in die Kurbelkammer (11) strömt, mit der Ölsprühdüse (33) stromauf des REED-Ventiles (27) verbunden ist.

2. Zweitakt-Motor nach Anspruch 1, **dadurch gekennzeichnet,** daß das Verbindungsrohr (35) den Boden der Kurbelkammer (11) direkt mit der Ölsprühdüse (33) verbindet, um zu gestatten, daß Schmieröl, das sich am Boden der Kurbelkammer (11) gesammelt hat, zu der Ölsprühdüse (33) bei einer Luftdruckerhöhung in der Kurbelkammer (11), veranlaßt durch einen abwärtigen Ausstoßhub eines Kolbens (6) des Motors, zugeführt wird.

3. Zweitakt-Motor nach Anspruch 1 oder 2, **dadurch gekennzeichnet,** daß das Rückschlagventil (32) an dem äußeren Bodenabschnitt des Kurbelgehäuses (3) befestigt ist, wobei der Einlaß des Rückschlagventiles (32) durch eine Bohrung mit dem Inneren des Kurbelgehäuses (11) kommuniziert, während der Auslaß des Rückschlagventiles (32) mit dem Verbindungsrohr (35) verbunden ist, das, seinerseits vorzugsweise in dem Einlaßabschnitt der Ölsprühdüse (33) mündet, deren Auslaß-Nasenabschnitt sich in den Luftansaugkanal (34) des Einlaßrohres (26) öffnet.

4. Zweitakt-Motor nach zumindest einem der vorhergehenden Ansprüche 1 bis 3, **dadurch gekennzeichnet,** daß die Ölsprühdüse (33) sich nahe einer Mittelachse oder einem Mittelabschnitt des Querschnittes des Luftansaugkanales (25) öffnet.

5. Zweitakt-Motor nach zumindest einem der vorhergehenden Ansprüche 1 bis 4, **dadurch gekennzeichnet,** daß die Ölsprühdüse (33) sich mit einem Abstand von ungefähr 5 bis 10 mm vor einem Grundabschnitt (37) des REED-Ventiles (27) öffnet.

## Revendications

1. Moteur à combustion interne à deux temps, équipé d'un système de lubrification utilisé pour amener de l'huile de lubrification directement à l'endroit à lubrifier, tandis que de l'air est amené dans la chambre de vilebrequin (11), par l'intermédiaire d'un passage d'admission (25) contenant un clapet à peigne (27), dans lequel ledit passage d'admission (25) est pourvu d'un buse de pulvérisation d'huile (33), dont la partie de bec débouche dans le passage d'admission (25), en amont dudit clapet à peigne (27), caractérisé en ce que la partie de fond du carter de vilebrequin (11) communique avec la buse de pulvérisation d'huile (33), en amont dudit clapet à peigne (27), par l'intermédiaire d'un tuyau de communication (35) comprenant un clapet anti-retour (32) destiné à empêcher l'air d'admission de s'écouler dudit passage d'admission, (25) audit carter de vilebrequin (11), en dérivation dudit clapet à peigne (27).

2. Moteur à combustion interne à deux temps selon la revendication 1, caractérisé en ce que ledit tuyau de communication (35) relie directement le fond du carter de vilebrequin (11) à la buse de pulvérisation d'huile (33), en permettant à l'huile de lubrification collectée au fond du carter de vilebrequin (11) d'être amenée à la buse de pulvérisation d'huile (33) lorsque la pression d'air augmente dans la chambre de vilebrequin (11), par suite de la course d'échappement descendante d'un piston (6) du moteur.

3. Moteur à combustion interne à deux temps selon la revendication 1 ou 2, caractérisé en ce que le clapet anti-retour (32) est fixé sur la partie de fond extérieure du carter de vilebrequin (3), l'entrée du clapet anti-retour (33) communiquant, par l'intermédiaire d'un perçage, avec l'intérieur du carter de vilebrequin (1), tandis que la sortie du clapet anti-retour (32) communique avec le tuyau de communication (35) qui, à son tour, s'achève de préférence dans la partie d'admission de la buse de pulvérisation d'huile (33), dont la partie de bec de sortie débouche dans le passage d'admission du tuyau (34) du tuyau d'admission (26).

4. Moteur à combustion interne à deux temps selon au moins l'une des revendications 1 à 3, caractérisé en ce que la buse de pulvérisation d'huile (33) débouche près d'un axe central ou d'une partie médiane de la section transversale du passage d'admission d'air (25).

5. Moteur à combustion interne à deux temps selon au moins l'une des revendications 1 à 4, caractérisé en ce que ladite buse de pulvérisation d'huile (33) débouche à une distance d'à peu près 5 à 10 mm en amont de la partie de base (37) du clapet à peigne (27).
